# EUROPEAN PATENT APPLICATION

(11) **EP 2 939 798 A1**
(43) Date of publication of application: **04.11.2015**
(21) Application number: 15162058.0
(22) Date of filing: 31.03.2015
(51) Int. Cl.: B25J 9/16, G05B 19/418

(54) **AN AUTOMATION SYSTEM AND A METHOD FOR TENDING A PRODUCTION SYSTEM**

(30) Priority: 02.05.2014 SE 1450525
(71) Applicant: OpiFlex Automation AB, 721 30 Västeras (SE)
(72) Inventor: Frisk, Johan, 722 13 Västerås (SE)
(74) Representative: Reyier, Ann-Mari

(57) **Abstract**

The present invention relates to an automation system for tending a production system comprising a plurality of workstations for producing products. The automation system comprises a mobile manipulator (2) adapted to perform work at the workstations, and an automatic guided vehicle (10), in the following named an AGV, arranged to move the manipulator between the workstations. The AGV and the manipulator are designed as two separate units, which can be positioned and moved independently of each other, and the AGV is arranged to supply the workstations with material needed for producing the products while the manipulator is carrying out work at one of the workstations.

## Description

### Field of the invention

The present invention relates to an automation system and a method for tending a production system comprising a plurality of workstations, wherein the automation system comprises a mobile manipulator adapted to carry out work at the workstations. The present invention also relates to a method for controlling an automation system tending the production system.

### Prior art

In many small factories the manufacture takes place at different workstations. The workstations may contain one or several fixed machines, a fixture for holding work pieces, or a table. The production can be speeded up if an industrial robot is used to carry out work on the workstations, for example, to tend the machines, to assemble parts to products, or to perform welding, gluing, drilling etc. It is usually not economically feasible to install a robotic device at each workstation. Therefore, there is a need to be able to easily move the robot between different workstations thereby obtain an optimal use of the robot.

An automatic guided vehicle (AGV) is a mobile device designed to be automatically moved based on a navigation system. The AGV's navigates, for example, by following markers or wires in the floor, using vision, magnets, or lasers. They are most often used in industrial applications to move materials around a manufacturing facility or a warehouse.

WO2010/043640 discloses an industrial robot system for performing work on a plurality of workstations. The robot system comprises a robot including a manipulator movable about a plurality of axes, and a robot controller for controlling the motions of the manipulator. The manipulator and the robot controller are positioned on and attached to a movable platform in the form of an AGV. Each workstation is provided with a docking station to provide a defined and fixed position for the manipulator in relation to the machine at the workstation. The AGV moves the robot between the workstations. When the AGV and the robot reach one of the workstations, the AGV is attached to the docking station positioned at the workstation. The AGV with the robot is positioned at the workstation while the robot carries out work at the workstation. When the robot has finished the work at the workstation, the AGV is detached from the docking station, and the AGV with the robot is moved to the next workstation.

US 5,280,431 discloses a mobile robot AGV, which moves along a plurality of predefined paths between pluralities of workstations. The robot AGV includes a robot attached to a mobile platform. Along the path the robot AGV stops at each workstation and performs different types of work at each workstation. The robot AGV is moved in response to commands from a stationary controller as well as in response to continuous position updates provided by an external navigation system.

### Object and summary of the invention

It is an object of the present invention to further improve the efficiency of the robot system.

According to one aspect of the invention, this object is achieved by an automation system as defined in claim 1.

The automation system comprises a mobile manipulator adapted to perform work at the workstations, and an automatic guided vehicle, in the following named an AGV, arranged to move the manipulator between the workstations. The invention is characterized in that the AGV and the manipulator are designed as two separate units, which can be positioned and moved independently of each other, and the AGV is arranged to supply the workstations with material needed for producing the products while the manipulator is carrying out work at one of the workstations.

A mobile manipulator is designed to be moved between different workstations and to perform work at each of the workstations. Due to the fact that the AGV and the manipulator are designed as two separate units, which can be positioned and moved independently of each other, the AGV can be used for other purposes, such as material handling, when the robot is occupied to perform work at one of the workstations. The AGV is commanded to leave the manipulator at one of the workstations, and is then free to be used to supply the workstations with material and parts needed for producing the products. When the manipulator has finished the work at the workstation, the AGV is commanded to move the manipulator to another workstation.

The present invention improves the degree of utilization of the AGV and by that improves the efficiency of the automation system. The present invention also reduces the number of AGV's needed in the automation system, since the same AGV can be used to move the manipulator as well as to supply material to the workstations.

With the term material is meant any type of material needed for producing the objects, such as crude material, work pieces to be processed and parts to be used for assembling products.

According to an embodiment of the invention, the automation system comprises a production planner configured to receive production orders including information about the products to be produced, and to generate a sequence of work orders including information about the work to be performed at the workstations. The automation system further comprises a production handler configured to generate commands regarding movements of the AGV based on the work orders, and an AGV controller configured to control the movements of the AGV in response to the commands from the production handler. The production planner is configured to plan the movements of the AGV based on the production orders. The production orders comprise information about which products to be manufactured and the number of products to be manufactured. The production planner breaks down the production orders into work orders. A work order includes information about what to do and where to do it. When the production planner has planned the work, the production handler executes the work orders by commanding the AGV to move the manipulator between the workstations and commanding the AGV to supply the workstations with the material needed for performing the work according to the work orders. The product planner makes it possible to plan the production based on product orders with regard to a high utilization of the AGV and a high utilization of the manipulator.

Suitably, the production handler is configured to generate commands including instructions to the AGV where to pick up the manipulator, where to place the manipulator, where to pick up the material, and where to place the material.

According to an embodiment of the invention, the production handler is configured to generate commands regarding motions of the manipulator, when the manipulator performs work at the workstations, based on said work orders, and the automation system comprises a robot controller configured to control the motions of the manipulator in response to the commands from the production handler. The production handler is configured to communicate with the AGV controller and the robot controller. The production planner plans the production at the workstations based on the received production orders. The production planner also generates work orders about the work to be performed by the manipulator at a certain workstation. According to this embodiment, the production handler is configured to generate command to the AGV controller as well as to the robot controller. Thus, the production handler has control over the movements of the AGV as well as the motions of the manipulator. Accordingly, it is possible for the production handler to have control over the entire production and to improve the efficiency of the production.

The production planner and the production handler can be located at one place, such as on an external server, in a cloud, or at a robot control unit. However, it is also possible that the production planner and the production handler are located at different locations. If they are located at different locations, the production planner and the production handler should be in communication with each other in order to allow them to exchange information.

According to an embodiment of the invention, the robot controller is configured to control the motions of the manipulator based on robot programs, the automation system comprises a program storage for storing robot programs comprising instructions for the manipulator how to perform work at the workstations, and a data storage for storing information about the workstations and which robot program is to be executed at the workstations, and the production handler is configured to select which robot program is to be executed by the robot controller based on the work orders and the information on the workstations, and to command the robot controller to execute the selected robot program.

According to an embodiment of the invention, the data storage is configured to store information about which tools to be used by the manipulator, and process data to be used by the manipulator when performing the work.

According to an embodiment of the invention, the production handler is configured to keep track of the material consumption at the workstations, and if a workstation is running out of material, to command the AGV to fetch material and move the material to the workstation that is running out of material. This embodiment further improves the utilization of the AGV and improves the efficiency of the production system.

The production system may comprise a material storage for storing material needed for producing the products, and the production handler is configured to command the AGV to fetch material from the material storage and to move the material to the workstation that is running out of material.

According to an embodiment of the invention, the manipulator is provided with at least one sensor configured to detect when the workstation at which the manipulator is currently located, is running out of material, and the robot controller is configured to inform the production handler accordingly. The production handler and the robot controller are configured to communicate with each other. The robot controller informs the production handler that the workstation is running out of material and accordingly cannot produce any more products. The production handler may then command the AGV to fetch more material and supply the workstation with the material needed.

According to an embodiment of the invention, the production system comprises a product storage for storing finished products, and the AGV is arranged to move finished products from the workstations to the product storage while the manipulator is carrying out work at one of the workstations. The AGV is arranged to fetch finished products from the workstations and to move the finished products to the product storage.

According to an embodiment of the invention, each of the workstations are provided with a docking stations to provide a defined and fixed position for the manipulator in relation to the workstation, and the manipulator is positioned on a movable platform, and the AGV is designed to carry the platform with the manipulator to the workstations and to attach the platform to the docking station before leaving the workstation.

According to another aspect of the invention, this object is achieved by a method for controlling an automation system tending a production system, as defined in claim 9.

The method comprises:
- commanding the AGV to move the manipulator to one of the workstations and to position the manipulator at the workstation,
- instructing the manipulator about the work to be performed at the workstation, and
- commanding the AGV to fetch material needed for producing the products and to move the material to one of the workstations while the manipulator is carrying out work at the workstation at which the manipulator is positioned.

According to an embodiment of the invention, the method comprises:
- receiving production orders including information about the products to be produced,
- generating commands regarding movements of the AGV based on the production orders, and
- controlling the movements of the AGV in response to the commands.

According to an embodiment of the invention, the method comprises:
- storing information about the workstations and the material needed at the workstation, and generating commands including instructions to the AGV where to pick up the manipulator, where to place the manipulator, where to pick up the material, and where to place the material based on the stored information and the production orders.

According to an embodiment of the invention, the method comprises generating commands regarding motions of the manipulator at the workstations based on said production orders, and controlling the motions of the manipulator in response to the commands.

According to an embodiment of the invention, the automation system comprises a robot controller configured to control the motions of the manipulator based on robot programs, and the method comprises:
- storing information about the workstations, and which robot program to be executed at each of the workstations,
- determining which robot program to be executed by the robot controller based on the production orders and the information on the workstations, and
- commanding the robot controller to execute the determined robot program.

According to an embodiment of the invention, the method comprises:
- supervising the material consumption at the workstation at which the manipulator is currently located, and if the workstation is running out of material, commanding the AGV to fetch material and supply the workstation with the material needed.

### Brief description of the drawings

The invention will now be explained more closely by the description of different embodiments of the invention and with reference to the appended figures.
Fig. 1 shows an example of a mobile robot.
Fig. 2 shows an example of an AGV.
Fig. 3 shows the AGV moving the mobile robot.
Fig. 4 shows the AGV moving a pallet with material.
Fig. 5 shows an example of a production system and an automation system for tending the production system according to one embodiment of the invention.
Fig. 6 shows a block diagram of an automation system according to one embodiment of the invention.
Fig. 7 shows a block diagram of an automation system according to another embodiment of the invention.

### Detailed description of preferred embodiments of the invention

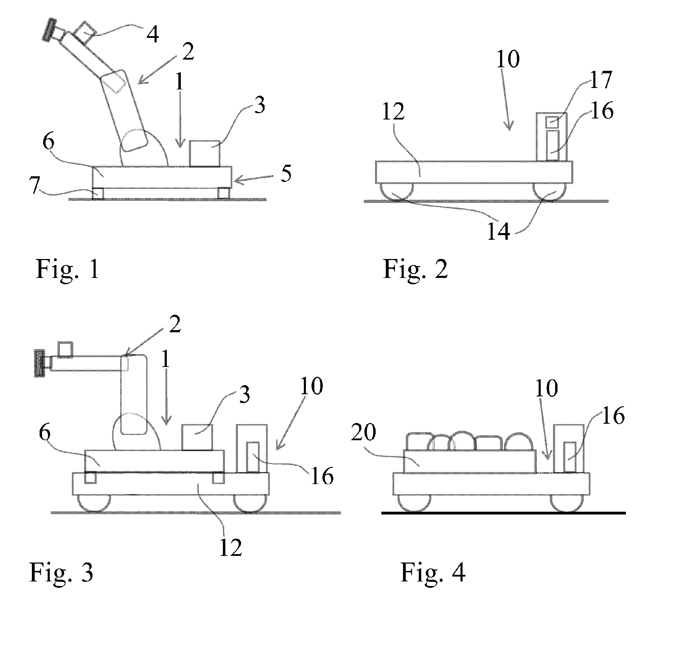

Figure 1 shows an example of a mobile robot 1. The robot 1 includes a manipulator 2 comprising a plurality of parts, such as arms, movable relative each other about a plurality of axes, and a robot control unit 3 including a robot controller for controlling the motions of the manipulator. The robot control unit 3 includes software as well as hardware. The hardware may include communication units for communication with external units, a processor unit including one or more central processing units (CPU's) for executing the software and robot programs. The software includes programs for handling main functions of the robot controller, for example, software for executing robot programs, performing path planning, providing orders to drive units of the manipulator regarding motions of the manipulator, such as desired position and velocity and generating motor references to the motors of the manipulator. In this embodiment, the manipulator is provided with a sensor 4, for example a camera, for detecting when the robot has run out of material. The sensor 4 can be other types of sensors and is optional.

In this embodiment, the manipulator 2 and the robot control unit 3 are positioned on a movable platform 5. In this embodiment, the movable platform is designed to be positioned at a floor close to a workstation at which the robot is performing work. The movable platform 5 comprises a body part 6 provided with legs 7 to support the platform when the platform is positioned on the floor. In another embodiment, the robot control unit can be stationary positioned and is wirelessly communicating with the manipulator.

Figure 2 shows an example of an automatic guided vehicle 10, in the following named an AGV. The AGV 10 is a mobile device designed to be automatically moved on a floor. The AGV comprises a body part 12 provided with wheels 14, and an AGV controller 16 configured to control the movements of the AGV. The AGV may also include a navigation unit 17 for navigating the AGV. The navigation unit 17 may include a sensor for determining the position of the AGV, for example, a camera, magnets, GPS, or lasers. The body part 12 of the AGV is designed for carrying objects. The body part 12 can be provided with forks for facilitating carrying of pallets. For example, the AGV can be an automatically moved fork truck.

Figure 3 illustrates the AGV 10 shown in figure 2, while moving the mobile robot 1, shown in figure 1.

Figure 4 illustrates the AGV 10, while moving a pallet 20 with material.

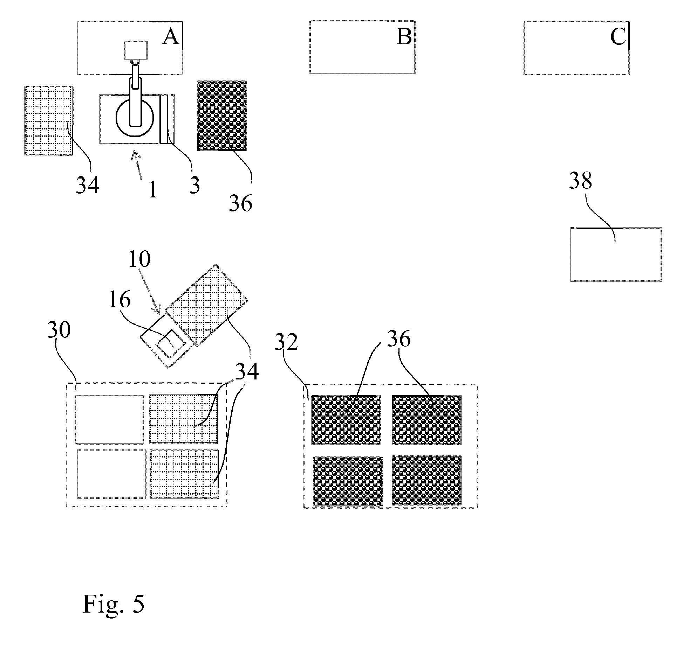

Figure 5 shows an example of a production system comprising a plurality of workstations A - C for producing products, and an automation system for tending the production system. The automation system comprising a mobile robot 1 adapted to perform work at the workstations, and an AGV 10 arranged to move the mobile robot between the workstations. In this embodiment, the automation system includes only one robot and one AGV. However, in alternative embodiments the automation system may include a plurality of robots and a plurality of AGV's. The workstations may contain one or several fixed machines to be tended by the robot, a fixture for holding work pieces while the robot processes the work pieces, or a table. Some of the workstations do not have any machine to be tended. In such case, the robot may perform work directly on the products, for example, assembling parts of the product, welding, grinding, gluing, drilling or painting.

The AGV 10 and the robot 1 are designed as two separate units, which can be positioned and moved independently of each other. The AGV is also arranged to supply the workstations A - C with material needed for producing the products while the manipulator 2 is carrying out work at one of the workstations. The production system may further include a material storage 30 for storing material needed for producing products and a product storage 32 for storing the finished products. The material needed for producing products are, for example, stored on pallets 34 and the finished products are, for example, stored on pallets 36.

In an alternative embodiment, each of the workstations A - C is provided with a docking station, and the platform 5 is provided with docking means for docking the platform to the docking stations to provide a defined and fixed position for the manipulator 2 in relation to the workstation, for example, as described in WO2010/043640. In this alternative embodiment, the AGV is designed to carry the platform 5 with the manipulator 2 to the workstations and to attach the platform to the docking station before leaving the workstation.

The automation system may further include a production control system 38 configured to receive production orders including information about the products to be produced. The production control system is configured to plan the production based on the production orders and to generate commands regarding movements of the AGV, in the following named AGV commands. The commands to the AGV include information on where to go, and what to do.

The AGV 10 moves the robot, including the manipulator 2, the robot control unit 3 and the movable platform 5, between the workstations A - C in response to AGV commands received from the production control system 38, as shown in figure 3. The AGV commands include instructions to the AGV where to pick up the manipulator, and where to place the manipulator. The AGV also moves material and finished products in response to AGV commands received from the production control system 38. The AGV commands may include instructions to the AGV where to pick up the pallet with material or finished products, and where to place the pallet with material or finished products.

The AGV lifts up the robot from the floor and moves the robot to the work station commanded by the production control system, and positions the robot on the floor at the workstation. Alternatively, the platform is attached to a docketing station at the workstation. Thereafter, the AGV leaves the robot and carries out other tasks, such as fetching a pallet 34 with material from the material storage 30, moving the pallet with material to one of the work stations A-C, fetching a pallet 36 with finished products from the workstation at which the robot is carrying out work, and moving the pallet 36 with finished products to the product storage 32, as shown in figure 4.

For example, the AGV is commanded to go to the material storage 30 and fetch a pallet 34 and move the pallet 34 to workstation A, to move the robot to workstation A, to go to the material storage 30 and to fetch a pallet 34, to move the pallet 34 to workstation B while the robot carries out work at workstation A, to fetch the robot at workstation A and move the robot to workstation B, and then go back to work station A and pick up a pallet 36 with products and move the pallet 36 to workstation C.

The production control system 38 may further be configured to generate commands regarding motions of the manipulator, in the following named manipulator commands, based on the production orders. The AGV commands are sent to the AGV controller 16, and the manipulator commands are sent to the robot control unit 3. The AGV controller 16 is configured to control the movements of the AGV in response to the AGV commands from the production control system 38. The robot controller is configured to control the motions of the manipulator 2 in response to the manipulator commands from the production control system 38. The production control system 38 includes software for carrying out production planning and handling as well as hardware, such a processing unit, memory, and communication units. The software of the production control system 38 can be stored and executed on a remote server, a local computer, or it can be stored and executed on the same hardware as the AGV controller or as the robot controller.

When the robot has been positioned at the workstation, the robot receives commands regarding the work to be performed at the workstation from the production control system 38.

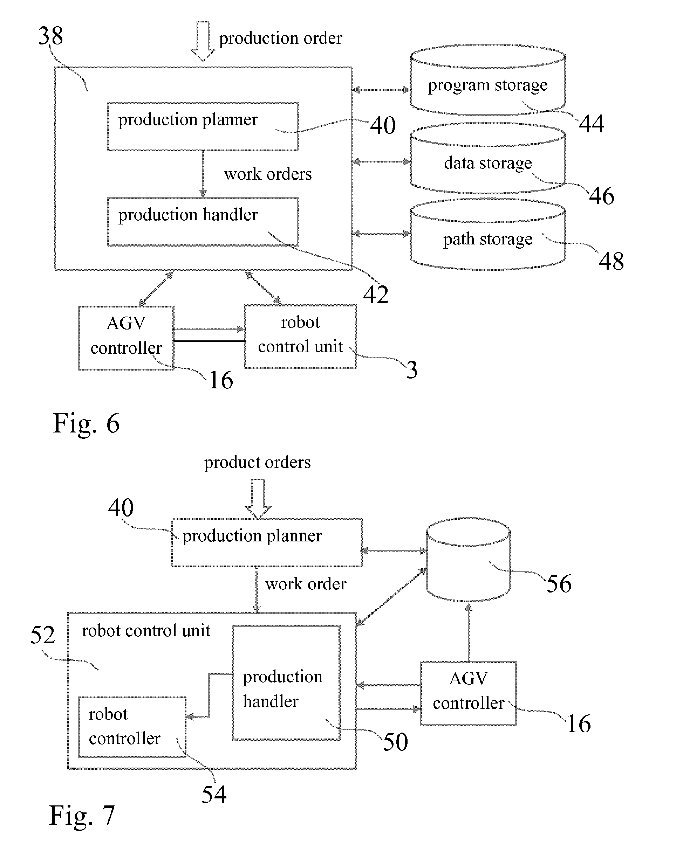

Figure 6 shows an example of an automation system according to the invention. The automation system includes a production control system 38 cooperating with the robot control unit 3 and the AGV controller 16. In this example, the production control system is running on a computer located outside the robot control unit and the AGV controller, for example, on an external server, or a stationary computer. The robot control unit 3 comprises a robot controller (not shown) for controlling the motions of the manipulator.

The production control system 38 is provided with suitable communication means (hardware and software) for communicating with the robot control unit 3 and the AGV controller 16. The production control system 38 comprises a production planner 40 and a production handler 42. The production planner 40 is configured to receive production orders including information about the products to be produced from an order system (not shown). For example, the production orders include information about which articles to be produced, the number of articles to be produced, and when the articles should be ready. The production planner 40 is configured to plan the production of the articles based on the production order, and to generate a sequence of work orders including instructions about the work to be performed and where the work is to be performed. The production planner 40 breaks down the production orders into a sequence of work orders. Each work order includes information about what to do and where to do it. The production handler 42 executes the work orders.

The production handler 42 is configured to communicate with the AGV controller 16. The production handler 42 is configured to generate commands regarding movements of the AGV based on the work orders and to send the commands to the AGV controller 16. The commands may include information about what to do, from where, and to where. For example, the command includes an instruction "fetch the manipulator", and information about where to fetch the manipulator. The AGV commands may also include a predefined path to be followed by the AGV. The AGV is moved in response to the commands from the production handler as well as in response to continuous position updates provided by a navigation system. The navigation system can be external as well as internal in the AGV. The AGV controller may send information about its current position, status and when it is ready, to the production handler 42.

The production handler 42 is configured to communicate with the robot control unit 3. The production handler 42 is configured to generate commands regarding motions of the axes of the manipulator, and to send the commands to the robot control unit 3. The commands may include a robot program to be executed at the workstation, the number of articles to be handled, information about the tool to be used, and process parameters to be used. The robot control unit 3 may report to the production handler 42 when the manipulator is ready. The robot control unit 3 may also report to the production handler 42 when the workstation has run out of material.

The AGV controller and the robot controller are configured to communicate with each other and to exchange information. This communication is important during positioning of the manipulator at the workstation, and it is particularly important when docketing the mobile platform to a docketing station. The communication may include status of the docketing, safety muting, and docketing open/closed. The robot controller may also be configured to communicate with machines located at the workstations.

The automation system shown in figure 6 also comprises a program storage 44 for storing a plurality predefined robot programs, a data storage 46 for storing data needed for controlling the movements of the AGV and the manipulator, and a path storage 48 for storing predefined paths to be followed by the AGV. The program storage, data storage and the path storage can be databases stored on a common memory unit or stored on separate memory units. The program storage, data storage and the path storage can be located at any place, for example, on a remote server, as long as the production handler can retrieve the data, paths and programs from the storages. In an alternative embodiment, the program storage can be located at the robot controller and the path storage can be located at the AGV controller. The data storage 46 may include two or more data storages located at different locations, for example on the robot controller and the AGV controller.

The program storage 44 is configured to store robot programs with instructions to the manipulator how to perform the work at the workstations. A robot program comprises robot program instructions written in a robot language. The robot program includes instructions on how move the axes of the robot in order to carry out the work at the workstation. The robot controller is configured to control the motions of the manipulator based on robot programs. The program storage comprises a robot program for each of the workstations including instruction on how the manipulator is to be moved to carry out the work at the workstation. The production hander is configured to determine which robot program to be executed by the robot controller based on the work orders and to command the robot controller to execute the determined robot program. For example, the production handler retrieves the determined robot program from the program storage and sends the robot program to the robot control unit together with the manipulator command. Alternatively, the production handler sends information to the robot control unit about which robot program to be executed and where to find the robot program, and the robot controller retrieves the robot program from the program storage.

The data storage 46 may include data about the workstations, for example, the positions of the workstations. The data storage may include information about where to find material needed at the workstations, for example positions in the material storage, and information about where to place finished products, for example positions in the product storage. The data storage may include information about the current position of the manipulator. The data storage may also include information about the current position of the AGV. The data storage may further include information about tools to be used by the robot at the workstations, process parameters for the robot, and other types of data needed for handling the work orders. The production handler is configured to generate AGV commands and manipulator commands based on data stored in the data storage.

The path storage 48 is configured to store a plurality of predefined paths for the AGV. For example, the predefined paths for the AGV include predefined paths between the workstations, between the material storage and the workstations, and between the product storage and the work stations. The production hander is configured to determine which path the AGV is to follow based on the work orders, and to instruct the AGV controller to follow the determined paths. For example, the production handler retrieves the determined path from the path storage and sends the path to the AGV controller together with the AGV command. Alternatively, the production handler sends information about the path to the AGV controller, and the AGV controller retrieves the path from the path storage. The AGV is moved in response to commands from the production handler as well as in response to continuous position updates provided by a navigation system. The navigation system can be external as well as internal in the AGV.

For example, a production order includes an order to manufacture products of type S1. The manufacturing of product S1 involves three manufacturing steps to be carried out at three different workstations, for example, drilling, grinding and painting.

The sequence of work orders may then include:
1) Supply workstation A with material for producing the products.
2) Move the manipulator to workstation A.
3) Carry out drilling on the products.
4) Move products from workstation A to workstation B.
5) Move the manipulator to workstation B.
6) Carry out grinding on the products.
7) Move products from workstation B to workstation C.
8) Paint the products.
9) Move the finished products to the product storage.

The production handler 42 will then, for example, generate the following commands to the AGV and to the robot controller:

### Commands to the AGV:

Fetch a pallet from shelf number 8 in the material storage.
Move the pallet to workstation A.
Fetch the manipulator and move the manipulator to workstation A.

### Command to robot controller:

Execute robot program 1 until finished.

### Commands to the AGV:

Move the pallet from workstation A to workstation B.
Move the manipulator to workstation B.

### Command to the robot controller:

Execute robot program 2 until finished.

### Commands to the AGV:

Move pallet with products from workstation B to workstation C.
Move the manipulator to workstation C.

### Command to the robot controller:

Execute robot program 3 until finished.

### Command to the AGV:

Move the pallet with finished products to shelf number 5 in the product storage.

Figure 7 shows another example of an automation system according to the invention. The automation system comprises a robot control unit 52, an AGV controller 16, and a production control system including production planner 40 and a production handler 50, and a data/program storage 56. In this example, the production control system is partly running on a computer located outside the robot control unit and the AGV controller, and partly on the robot control unit 52. The production planner 40 is implemented on an external computer, for example, on an external server. The production handler 50 is implemented on the robot control unit 52. The robot control unit 52 comprises a robot controller 54 for controlling the motions of the manipulator.

The robot control unit 52 receives work orders from the production planner 40. The production control system further includes one or more storages 56, for example in the form of databases, for storing predefined paths for the AGV, robot programs, data about the workstations, data about the material storage, data about the material needed at the workstations, data about the product storage, data about process parameters for the robot and the work to be performed by the robot, and other types of data needed for handling the work orders.

The production handler 50 and the AGV controller 16 communicate with each other. The production handler sends commands and questions to the AGV controller, and the AGV controller answers the questions, and sends information about its current status to the production handler. The AGV controller informs the production handler when the AGV has accomplished a command, for example, when the manipulator has been moved to a workstation or when a workstation has been supplied with material.

The AGV controller 16 is configured to retrieve data regarding where to fetch material and where to leave finished products, and paths to be followed from the storage 56. The production handler 50 is configured to retrieve data, such as robot programs, tool data, and process parameters from the storage 56 and to generate commands to the robot controller 54 about the work to be carried out by the manipulator based on the work orders.

The production handler 42, 50 handles the material supply to the work stations, the transportation of products between the work stations, and transportation of finished products to the product storage. The production handler may keep track on the material consumption on the work stations, and if a work station runs out of material, the production handler commands the AGV to fetch material and move it to the work station. For example, the robot controller informs the production handler that it is running out of material. For example, the manipulator is provided with at least one sensor configured to detect when the workstation at which the manipulator is currently located, is running out of material, and the robot controller is configured to inform the production handler accordingly.

Another sequence of work orders may include:
1) Move the manipulator to workstation A.
2) Supply workstation A with work pieces for producing the products.
3) Carry out work on the work pieces.
4) Get more material to workstation A.
5) Transport output pallets to product storage.
6) Get new empty output pallet from pallet storage.
7) Continue to carry out work on the work pieces at workstation A.

The production handler 50 will then generate the following commands to the AGV controller:
Fetch my manipulator and move it to workstation A.
Fetch a pallet with work pieces and move the pallet to workstation A.
Fetch empty output pallet and move it to workstation A.
When those commands have been executed by the AGV controller and the production handler has received acknowledge from the AGV controller, the robot controller is commanded to retrieve a certain robot program for carrying out work on the work pieces, and then to start executing the robot program. The robot controller is commanded to perform the work until the pallet is empty. When the pallet is empty, the production handler 50 will generate the following commands to the AGV controller:
Move pallet with finished products to production storage.
Move empty pallet to output position.
Fetch a pallet with work pieces and move the pallet to workstation A.
The production handler commands the robot controller to continue the work.

The AGV controller will for the command "Fetch my manipulator and move it to workstation A" do the following:
Ask the data storage 56 where the manipulator is located and where workstation A is located.
Determine the current position of the AGV. The current position of the AGV is, for example, determined by using the navigation system. Alternatively, the current position of the AGV is retrieved from the data storage 56.

Retrieve path for how to move from the current position of the AGV to the manipulator position, and how to move from the manipulator position to workstation A. Move the AGV along the retrieved path, pick up the manipulator, and move it to workstation A and place the manipulator at the workstation. Update the data storage 56 with the new position of the manipulator.

The AGV command "Fetch a pallet with work pieces and move the pallet to workstation A" will result in similar behavior:
Ask the data storage 56 where the pallet with work pieces is located and where workstation A is located. Determine the current position of the AGV.
Retrieve paths for how to move from the current position of the AGV to the position of pallet with work pieces, and how to move from the pallet position to workstation A.
Move the AGV along the retrieved paths.

The automation system may comprise more than one mobile robot and more than one AGV. In such case the control system may include a resource planner configured to determine which robot and which AGV is available and to command the available AGV to move the available robot to the workstation. If the system includes more than one AGV, one AGV can supply material to the workstation simultaneously as the other AGV moves the robot to the workstation. When the robot need to be moved to another workstation, the production planner may send out a broadcast to all of the AGV's and ask for a free AGV.

The present invention is not limited to the embodiments disclosed but may be varied and modified within the scope of the following claims. For example, the production control system can be implemented in a number of different ways.

## Claims

1. An automation system for tending a production system comprising a plurality of workstations for producing products, wherein the automation system comprises:
- a mobile manipulator (2) adapted to perform work at the workstations, and
- an automatic guided vehicle (10), in the following named an AGV, arranged to move the manipulator between the workstations, **characterized in that** the AGV and the manipulator are designed as two separate units, which can be positioned and moved independently of each other, and the AGV is arranged to supply the workstations with material needed for producing the products while the manipulator is carrying out work at one of the workstations.

2. The automation system according to claim 1, wherein the automation system comprises:
- a production planner (40) configured to receive production orders including information about the products to be produced, and to generate a sequence of work orders including information about the work to be performed at the workstations,
- a production handler (42;50) configured to generate commands regarding movements of the AGV based on the work orders, and
- an AGV controller (16) configured to control the movements of the AGV in response to the commands from the production handler.

3. The automation system according to claim 2, wherein the production handler (42; 50) is configured to generate commands including instructions to the AGV where to pick up the manipulator, where to place the manipulator, where to pick up the material, and where to place the material based on said stored information.

4. The automation system according to claim 2 or 3, wherein said production handler (42;50) is configured to generate commands regarding motions of the manipulator at the workstations based on said work orders, and the automation system comprises a robot controller (54) configured to control the motions of the manipulator (2) in response to commands from the production handler.

5. The automation system according to claim 4, wherein the robot controller (54) is configured to control the motions of the manipulator (2) based on robot programs, the automation system comprises a program storage (44;56) for storing robot programs with instructions to the manipulator how to perform the work at the workstations, and a data storage for storing information about the workstations and which robot program to be executed at the workstations, and said production handler (42;50) is configures to determine which robot program to be executed by the robot controller based on the work orders and the stored information, and to command the robot controller to execute the determined robot program.

6. The automation system according to any of the claims 2 - 5, wherein the production handler (42;50) is configured to keep track of the material consumption at the workstations, and if a workstation is running out of material, the production handler is configured to command the AGV to fetch material and to move the material to the workstation that is running out of material.

7. The automation system according to claim 6, wherein the manipulator (2) is provided with at least one sensor (4) configured to detect when the workstation at which the manipulator is currently located, is running out of material, and the robot controller is configured to inform the production handler accordingly.

8. The automation system according to any of the previous claims, wherein each of the workstations are provided with a docking station to provide a defined and fixed position for the manipulator (2) in relation to the workstation, and the manipulator is positioned on a movable platform (5), and the AGV (10) is designed to carry the platform with the manipulator to the workstations and to attach the platform to the docking station before leaving the workstation.

9. A method for controlling an automation system tending a production system comprising a plurality of workstations for producing products, wherein the automation system comprises a mobile manipulator (2) adapted to perform work at the workstations, and an automatic guided vehicle (10), in the following named an AGV, **characterized in that** the method comprises:
- commanding the AGV to move the manipulator to one of the workstations and to position the manipulator at the workstation,
- instructing the manipulator about the work to be performed at the workstation, and
- commanding the AGV to fetch material needed for producing the products and to move the material to one of the workstations while the manipulator is carrying out work at the workstation at which the manipulator is positioned.

10. The method according to claim 9, wherein the method comprises:
- receiving production orders including information about the products to be produced,
- generating commands regarding movements of the AGV based on the production orders, and
- controlling the movements of the AGV in response to the commands.

11. The method according to claim 10, wherein the method comprises:
- generating commands including instructions to the AGV where to pick up the manipulator, where to place the manipulator, where to pick up the material, and where to place the material based on the stored information and the production orders.

12. The method according to claim 10 or 11, wherein the method comprises generating commands regarding motions of the manipulator at the workstations based on said production orders, and controlling the motions of the manipulator in response to the commands.

13. The method according claim 12, wherein the automation system comprises a robot controller (54) configured to control the motions of the manipulator based on robot programs, and the method comprises:
- storing information about the workstations, and which robot program to be executed at each of the workstations,
- determining which robot program to be executed by the robot controller based on the production orders and the information on the workstations, and
- commanding the robot controller to execute the determined robot program.

14. The method according any of the claims 9 - 13, wherein the method comprises:
- supervising the material consumption at the workstation at which the manipulator is currently located, and if the workstation is running out of material, commanding the AGV to fetch material and supply the workstation with the material needed.
